# EUROPEAN PATENT APPLICATION

(11) **EP 2 330 763 A1**
(43) Date of publication of application: **08.06.2011**
(21) Application number: 09177937.1
(22) Date of filing: 03.12.2009
(51) Int. Cl.: H04J 14/02, H04B 10/207, H04N 7/22, H04L 12/28, H04Q 11/00

(54) **Method and device for conveying data across a shared medium**

(71) Applicant: Nokia Siemens Networks Oy, 02610 Espoo (FI)
(72) Inventor: Morper, Hans-Jochen, 85253 Erdweg (DE); Schmidt, Ernst-Dieter, 83620 Feldkirchen-Westerham (DE)

(57) **Abstract**

A method and a device for conveying data across a shared medium are provided, wherein at least one resource is allocated for an end-to-end connection; and wherein said data is conveyed across the shared medium via the end-to-end connection.

## Description

The invention relates to a method and to a device for conveying data across a shared medium.

The solution presented herein in particular relates to the field of optical transport in metro or backbone networks, optical access and home networks.

At present, broadband users have access to the Internet or to operator services utilizing access technologies depending on their access providers' network capabilities. Access technologies may comprise xDSL, Cable TV, PON, broadband mobile access (HSPA, LTE), Ethernet, etc.

Although the physical principles of data transmission are different (e.g. optical transmission compared to tones utilized by DSL modems), the user is not aware of such differences regarding the access technologies; instead, a front-end equipment (access router) deployed at the user's home network is a mediation device, which interworks with an access technology as provided.

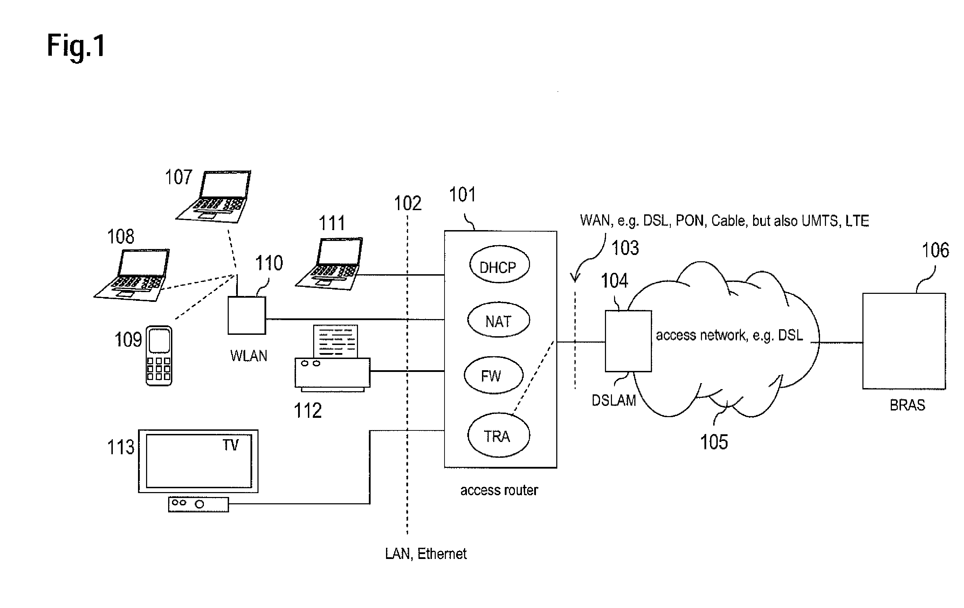

**Fig.1** shows an exemplary block diagram comprising user devices 107 to 109 and 111 to 113 that are connected via a LAN or Ethernet connection 102 to an access router 101 that is further connected via a WAN 103 to a DSLAM 104 and thus via an access network 105 to a BRAS 106. The user devices 107 to 109 are coupled via a wireless LAN 110 to the access router 101. The user devices 107, 108 and 111 are computers with a wireless or a cable connection, the user device 109 is a mobile phone or a device with a mobile phone's functionality, the user device 112 is a printer and the user device 113 is a set-top box connected to a television screen (also referred to as TV device).

In DSL network scenarios, the user may receive the access router 101 from the operator. The access router 101 may comprise a modem to handle the transport layers (TRA) of the particular technology utilized, e.g., a DSL modem that interacts with the DSLAM 104, a PPPoE termination that interworks with the BRAS 106 as well as DSL specific higher-layer parameter sets like user name and/or password to interact with AAA authentication.

Additionally, the access router 101 may comprise typical commodity functions that are helpful in a home environment, e.g., a DHCP server that assigns private IP addresses to devices connected to the access router via the home network, a network address translation function (NAT) that translates one (or several) public IP addresses to multiple home addresses and may provide port forwarding as well as a firewall (FW), which allows selective port blocking especially for incoming traffic.

The layer 1 and layer 2 connection of the home network may be based on Ethernet and/or a LAN; users may thus connect their devices via RJ45 plugs or provide a wireless connection via WLAN. The WLAN access point 110 shown in Fig.1 may act as a bridge supplying a wireless connection of the user devices 107 to 109.

This scenario does not require the user to be aware of the actual access technology employed; instead the user may perceive the access router 101 as a box offering Ethernet connectivity as well as auxiliary services (like DHCP).

The TV device on the other hand may require a different authentication (not via the BRAS/AAA) via cable modem distribution centers based on, e.g., DHCP option 82.

In an optical scenario, the access router may be supplied with an optical network unit (ONU) instead of the DSL modem.

Hence, regardless of the actual access technology utilized, common principles of a user's home network may comprise:
- the home network is a LAN that is based on the Ethernet;
- the access router may comprise several commodity functions to run a home LAN (e.g., DHCP, NAT);
- devices to be connected to the home network may in particular be at least one of the following: a computer or notebook, a printer, a TV device (a set-top box), a telephone or the like.

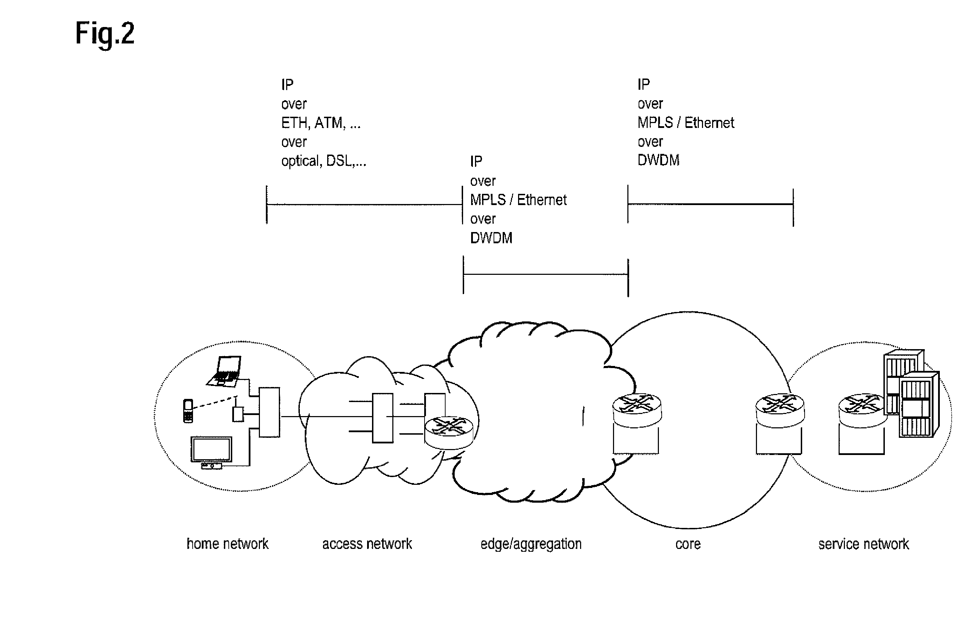

When user devices communicate with servers in the Internet or with video centers in an operators' core network, a significant amount of traffic will leave the access network and the access provider's domain. Depending on the role of the operator and depending on the type of service used, the traffic may be conveyed from the access network (which is, e.g., DSL based) over an IP edge (e.g., a BRAS) to an aggregation network, further via a core network to a service network (e.g., national Internet exchanges) and then the same way to a target, e.g. a server at the edge of a far-off access network (see **Fig.2****).**

For traffic passing several networks, different transport technologies may be employed, e.g., DSL, optical fiber, cable TV in the access, CET in the metro area, IP/MPLS over DWDM in the aggregation or core network.

Since transport networks are unaware of their conveyed services and since different domains may use different transport technologies, the layers terminate up to the IP layer (unpack traffic) at the edges of each domain or network. Then, for the subsequent domain or network, traffic is wrapped by the protocol layers of the adjacent domain or network and processed across this subsequent domain or network. This unpacking and packing at the edges or crossover-points between domains or networks require IP routers, which need a high processing performance, therefore consume a considerable amount of energy and are quite expensive.

Thus, a user or device in a user's home network communicates with a peer service network via layered protocols with the lower layers being typically transport related (e.g., CSMA/CD for home LAN). One or several network layers (e.g., IP as layer 3) and higher layers relate to an end-to-end connection oriented flux control (e.g., TCP) and to service layers (e.g., HTTP).

Whenever transport layers are different, the layers below need to be terminated (i.e. typically up to and including the IP layer) and higher layers are "restacked", i.e. wrapped into the protocol of the subsequent transport technique. In case of an optical transport in the core or aggregation domain this results in
a) optical/electrical interworking (i.e. optical transport is terminated, payload is repacked and put onto optical transport again), which requires expensive and power consuming facilities at each crossover point;
b) processing per (IP-)packet, wherein each IP packet is analyzed with regard to source and destination addresses, which also requires power consuming IP routers.

Present networks may thus experience limitations regarding a traffic growth predicted in particular because current IP routing capabilities may become a bottleneck as the performance of the IP routers is not going to cope with the increasing traffic.

The **problem** to be solved is to overcome the disadvantages pointed out above and in particular to provide an efficient data transport throughout a network comprising several domains or networks utilizing various technologies or being operated by different vendors.

This problem is solved according to the features of the independent claims. Further embodiments result from the depending claims.

In order to overcome this problem, a method is provided for conveying data across a shared medium,
- wherein at least one resource is allocated for an end-to-end connection;
- wherein said data is conveyed across the shared medium via the end-to-end connection.

It is noted that the end-to-end connection can be a semi-static or a semi-permanent end-to-end connection. The end-to-end connection may in particular comprise an Internet connection.

It is further noted that the shared medium may comprise several nodes that have access to other nodes (in particular all other nodes) of the medium.

Advantageously, an end-to-end (E2E) traffic delivery can be provided without further involvement of (higher) layers. This significantly reduces the processing complexity and requirements along the connection between the endpoints (here: source and destination).

It is also an advantage that the traffic can be scaled based on the granularity of the at least one resource; in particular the traffic (e.g., required bandwidth) can be adjusted per user and/or location and/or per service.

As another advantage, the solution provided does not require costly IP routers to be deployed along the path of the end-to-end connection.

Hence, a physical transport is provided in an E2E manner. At least unnecessary optical/electrical conversions or unnecessary packet processing (packet inspection) at crossover points of networks or domains along the E2E connection can be avoided.

In an embodiment, the at least one resource is allocated for the end-to-end connection between a source and a destination.

Hence, a utilization of resources may be propagated across the shared medium in an E2E manner.

In another embodiment, a portion of resources is allocated for a source of the end-to-end connection.

Hence, a particular amount of resources (set of resources) may be assigned to a particular source. This could be realized by a set of wavelengths of a spectrum that could be utilized for conveying data via an optical fiber. The set of resources may comprise successional resources.

In a further embodiment, a particular resource of the portion of resources allocated is assigned to a destination of the end-to-end connection.

Hence, the connection between the source and the destination is defined in an end-to-end manner by allocating at least one resource for this end-to-end connection.

In a next embodiment, the resource comprises at least one of the following:
- at least one wavelength or at least one frequency;
- at least one wavelength or frequency band;
- at least one timeslot.

The resource may in particular be an optical resource, e.g., a wavelength range (or band) of an optical network.

It is noted that resources can be combined, e.g., a timeslot on a certain wavelength in case a wavelength range is shared in a time division duplexing manner.

It is also an embodiment that the shared medium comprises at least one network, in particular at least one transport network.

It is noted that the shared medium may comprise at least two transport networks, wherein these at least two transport networks may utilize at least one transport technology. In particular the at least two transport networks may utilize different transport technologies.

It is also noted that a network may comprise components (network elements) that are connected (at least partially) with one another. In particular, the components can communicate with one another across such network. Various network topologies may apply and different protocols can be used. Different (physical or operator-driven) networks may be connected with one another.

Pursuant to another embodiment, said transport network is an optical network.

According to an embodiment, the at least one network comprises a wireless network and/or a wired network. Hence, the at least one resource may comprise a resource of the wireless network or a resource of the wired network.

According to another embodiment, the at least one resource is allocated per transport network.

In yet another embodiment, the at least one resource is allocated per service class.

According to a next embodiment, the service class comprises at least one of the following:
- Internet access;
- voice services;
- television services.

Pursuant to yet an embodiment, the at least one resource comprises a resource of a physical layer that is allocated for the end-to-end connection.

Pursuant to another embodiment, the at least one resource comprises a resource of a physical layer, a data link layer and/or a medium access control layer that are allocated for the end-to-end connection.

Said layers may be structured pursuant to the OSI reference model. The physical layer may thus correspond to layer 1 and the data link layer may correspond to layer 2 of the OSI reference model.

The problem stated above is also solved by a device comprising or being associated with a processing unit that is arranged such that the steps as described can be executed thereon.

According to an embodiment, said device is a network component, in particular a or being associated with a device of an end-to-end connection.

The device may in particular be an access router, e.g., an ONU of an optical network, or an MLAR or an OLT.

It is further noted that said processing unit can comprise at least one, in particular several means that are arranged to execute the steps of the method described herein. The means may be logically or physically separated; in particular several logically separate means could be combined in at least one physical unit.

Said processing unit may comprise at least one of the following: a processor, a microcontroller, a hard-wired circuit, an ASIC, an FPGA, a logic device.

The problem is also solved by a communication system comprising at least one of the aforementioned devices.

Embodiments of the invention are shown and illustrated in the following figures:
- Fig.3: shows a schematic diagram comprising 50 system resources and an allocation scheme of such resources;
- Fig.4: visualizes a schematic network diagram comprising several networks, the sources being deployed at predefined locations, and the user locations, wherein each user is supplied with services from said sources;
- Fig.5: shows an exemplary implementation based on optical transport medium, wherein resources comprise optical wavelengths.

The solution suggested in particular enables an end-to-end flat layered cross domain traffic delivery system without having to provide layer-convergence at the edges of the network, i.e. it efficiently allows avoiding IP routing at the edges of networks or domains.

Users may employ a set of similar services. For example, each user may require video, voice and Internet services. Most services can be offered from distinct locations of and E2E network, e.g.
- video services may be supplied by a video head end, wherein one such video head end can be provided per access network;
- Internet access may comprise HTTP-traffic that is typically routed via HTTP-proxies and Internet exchanges;
- VoIP traffic can be routed to a VoIP network comprising, e.g., a SIP server and a media gateway.

In an E2E network, same or similar resource types can be used for transmission purposes, e.g. optical wavelengths and/or timeslots.

The approach provided herein in particular suggests propagating a distinct use of resources in an E2E manner. Therefore, the one-to-many relationship in downlink and the many-to-one relationship in uplink may be modified accordingly.

Today's networks provide a huge amount of bandwidth via existing fibers, but they lack a suitable bandwidth scalability. Hence, the solution provided enables a high degree of granularity regarding the scalability of resources, e.g., resources can be scaled per service and/or usage, in particular regarding an E2E connection across network borders.

For example, three sources S1, S2 and S3 may offer different services (e.g., voice, video, Internet access). The sources S1, S2 and S3 are deployed at different locations h1 to h3. In addition, three users are positioned at locations 11 to 13 ("user locations"), wherein each user requires the services offered by the sources S1 to S3.

Hence, the users can be deemed destinations to the sources S1 to S3: D11 denotes the destination for the source S1 at the user location 11, D21 denotes the destination for the source S2 at the user location 11, etc. Accordingly, D33 denotes the destination for the source S3 at the user location 13.

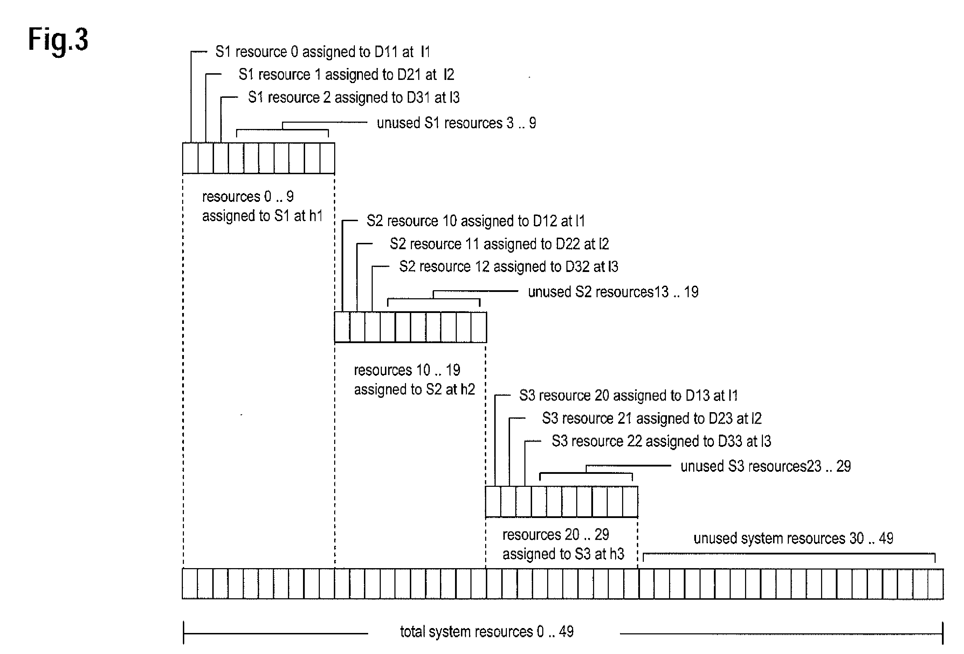

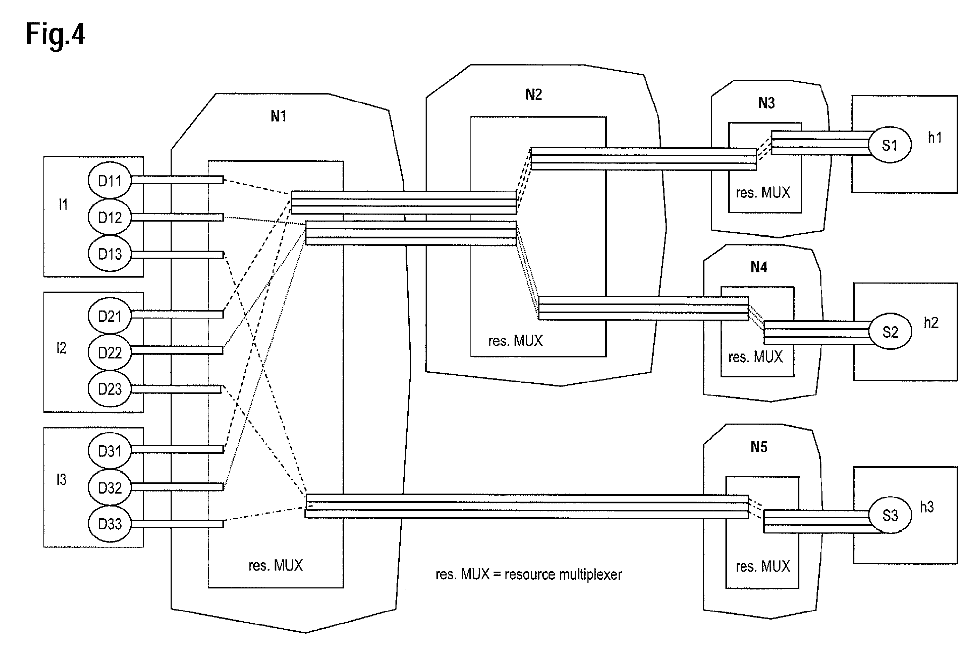

In addition, the whole end-to-end system may (as an example) comprise a set of 50 resources, numbered 0 to 49. **Fig.3** shows a schematic diagram comprising 50 system resources and an allocation scheme of such resources. **Fig.4** visualizes a schematic network diagram comprising several networks N1 to N5, the sources S1 to S3 being deployed at locations h1 to h3, and the user locations 11 to 13, wherein each user is supplied with the services from the sources S1 to S3 (shown at destinations Dij at the user locations h1 to h3, wherein i indicates the user's location and j indicates the source (or service)).

The resources can be assigned to the sources S1 to S3 such that a resource set is assigned to each source, i.e. the resources 0 to 9 are assigned to the source S1, the resources 10 to 19 are assigned to the source S2 and the resources 20 to 29 are assigned to the source S3. The remaining resources 30 to 49 are unused (in this example) and are assigned for future use (e.g., services S4 to S99, not shown).

Each set of resources can be structured such that within each set one (or several) resource(s) is/are assigned to different corresponding destinations at user locations 11 to 13: Hence, resource 0 (from the resource set assigned to the source S1) can be assigned to the destination D11, resource 22 (from the resource set assigned to the source S3) can be assigned to the destination D33. Within each resource set, 10 resources are available and three are allocated as shown in Fig.3. Hence, additional destinations or users can be allocated for each resource set.

This resource assignment scheme can be applied to an end-to-end scenario as shown in Fig.4. In this example, the network N1 is connected to all user locations 11 to 13. Traffic from the source S1 at the user location h1, which is connected to the network N3, is conveyed via the network N2; this also applies to traffic from the source S2 at the user location h2, which is connected to the network N4. The source S3 at the location h3 is connected to the network N5, which is directly connected to the network N1.

All networks can be connected such that across each connection the full set of system resources is available, i.e. at each resource multiplexer within each network N1 to N5; all resources are visible and accessible. The resource multiplexer will be described in further detail below.

At the network N1, all traffic from/to all destinations D11 to D33 is multiplexed by a resource multiplexer (res. MUX in Fig.4) as follows:
1) All traffic related to the resources assigned to the source S1, namely traffic to/from the destinations D11, D21 and D31 is multiplexed onto a connection towards the network N2 and all traffic related to the resources assigned to the source S2, namely traffic to/from the destinations D12, D22 and D32 is multiplexed onto the connection towards the network N2. Hence, the following resources are in use for the connection between the networks N1 and N2: resources 0, 1, 2, 10, 11, 12 (see also Fig.3). All other resources are unused on this connection between the networks N1 and N2 and can be utilized for different purposes. In the network N2, a resource multiplexer may multiplex resources assigned to the source S1 via a connection with the network N3 and resources assigned for the source S2 via a connection with the network N4. Thus, along the connection between the networks N2 and N3, only resources 0, 1, 2 are allocated and along the connection between the networks N2 and N4 only resources 10, 11, 12 are allocated.
2) The resource multiplexer of the network N1 may multiplex the resources assigned to the source S3 onto the connection to the network N5. Thus, resources 20, 21, 22 are allocated along the connection between the networks N1 and N5.

Therefore, simple multiplexers can be used that work on the same layer as the resources that are being multiplexed. Advantageously, an end-to-end traffic delivery can be provided without further involvement of (higher) layers. This significantly reduces the processing complexity and requirements along the connection between the endpoints (here: source and destination) of the E2E connection.

It is also an advantage that the traffic can be scaled based on the granularity of the single resource; in particular the traffic (e.g., required bandwidth) can be adjusted per user and/or location and/or per service.

Advantageously, the system provided can be set up for a region, city or area, where a fiber with, e.g., tens of terabit per second data rate can be utilized as described herein.

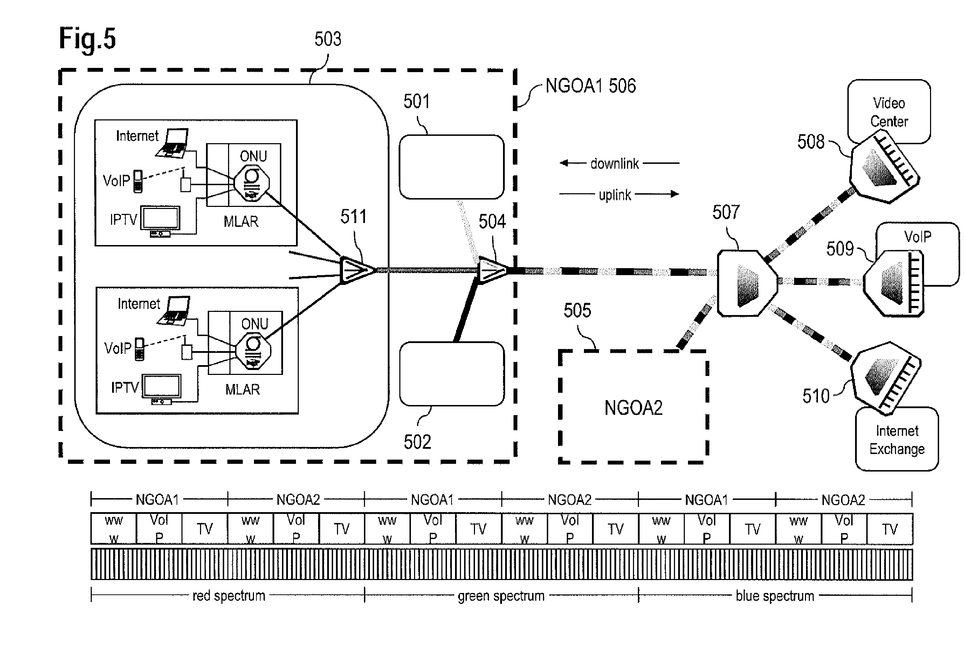

**Fig.5** shows an exemplary implementation based on optical transport medium, wherein resources comprise optical wavelengths.

As an example, three services are required by a majority of users, i.e. Internet access (www), Voice over IP (VoIP) and IPTV (e.g., video on demand (TV)). It is assumed that each of these services has a common source point in the network from where it is distributed: Video services are provided by a video center, voice services are handled by a VoIP network and Internet access is conveyed to/from Internet exchanges.

System resources comprise optical wavelengths, in particular wavelength bands, which are referred to herein also as wavelengths.

The wavelength bands may be of different sizes, thereby allowing to scale the related bandwidth, e.g., from some Mbps to some tens of Gbps. The optical fiber may provide wavelengths of the whole usable spectrum, which is for illustrative purposes referred to as a spectrum comprising red, green and blue colored wavelengths.

According to this exemplary scenario, users are equipped with multi-lambda access routers (MLARs), which can be used as a replacement of existing DSL-based access routers. Instead of DSL, optical access is used for transport purposes. The rest of today's access router functionality may remain unchanged, i.e. DHCP, NAT and firewall services could be provided accordingly by the optical access.

The MLAR may comprise a functionality that allows different wavelengths to be used for different services. Different wavelengths (or wavelength bands) could be assigned to different resources. This could be achieved by using distinct physical ports (e.g., video may use an Ethernet port 1, VoIP may use an Ethernet port 2 and Internet may use an Ethernet port 3. Alternatively, specific header information of the Ethernet frame can be utilized to detect, which service is used on which port or the MLAR may provide packet inspection to determine which service is used on which port. Also, the user may manually assign ports to services.

In order to distribute optical signals, a PON splitter 511 can be deployed, which can be considered as an optical hub: Hence, the PON splitter 511 distributes the whole spectrum received in downlink direction (i.e. towards the users) and vice versa.

Additionally, an advanced CWDM splitter 504 can be utilized, which act as a filter and splits the spectrum in downlink direction into different portions, e.g., red, green, blue portions. In uplink direction, these different portions are multiplexed to a combined spectrum at such CWDM splitter 504.

Also, an optical multiplexer 507 can be deployed that allows nearly all kind of multiplexing of wavelengths (or wavelength bands), e.g., a portion of the green band, a sub-band of the red band, etc.

Moreover, a service center in the network may comprise an optical line termination (OLT), which may act as a counterpart to the ONU that is deployed at the user's premises. The OLT may comprise optical and/or electrical equipment necessary to optically communicate in downlink direction via wavelengths assigned. Also, the OLT communicates via optical fiber with servers or networks in uplink direction.

It is noted that the OLT may be located with a network provider that operates the OLT on behalf of a service provider or on behalf of several service providers. In the example shown in Fig.5, each service provider operates a separate OLT 508, 509, 510.

For the system to work efficiently, optical resources at the user side may be aligned with optical resources at the service side, i.e. wavelengths used per service and/or user may preferably be unique. This could be provided, e.g., by OAM means, in particular conducted by operators that supply user access as well as access for service providers. In particular, users may configure their MLAR, in coordination with service providers, e.g., via WEB access.

An operator may supply an all-optical-network using next-generation optical access, referred to as NGOA1 506. Another (or the same) operator may supply another network of the same kind which is referred to as NGOA2 505.

Each of these networks NGOA1 506 and NGOA2 505 may use a CWDM splitter (504 for NGOA1 506) in order to appropriately reflect, e.g., a geographical structure or topology of the networks.

Hence, a portion 501 of the network NGOA1 506 operates on red wavelengths, a portion 502 of the network NGOA 506 operates on blue wavelengths and a portion 503 of the NGOA 506 operates on green wavelengths. Within each portion 501, 502 and 503, resource area traffic may be distributed by PON splitters (as indicated by the PON splitter 511 for the portion 503).

The networks NGOA1 506 and NGOA2 505 may share the same pool of resources comprising the complete (white) spectrum with its red, green and blue wavelengths.

Each network NGOA1 506 and NGOA2 505 may be supplied with a unique portion of the spectrum, e.g. the network NGOA1 506 may be assigned a lower half of the red, green and blue wavelengths and the network NGOA2 may be assigned the corresponding upper half of the red, green and blue wavelengths. The distribution of the wavelengths can be provided by the optical multiplexer 507 to which a video center is connected via the OLT 508, a VoIP network is connected via the OLT 509 and an Internet exchange is connected via the OLT 510.

Each network NGOA1 506 and NGOA2 505 may further structure its resources by, e.g. utilizing service classes: Hence, the network NGOA1 506 may use the lower third of the red, green and blue wavelengths for Internet access, the second third of the respective wavelengths for VoIP and the upper third of the respective wavelengths for IPTV.

Within each resource set assigned to services, resources can be assigned to users in a sequential order: The NGOA1 506 may supply a first user within the portion 503 "green wavelengths" with a lowest green wavelength of the lowest third of the resource pool for Internet services, the lowest green wavelength of the middle third of the resource pool for VoIP and the lowest green wavelength of the upper third of the resource pool for video services. Accordingly, a second user may be assigned the respective next sequential resource(s), etc.

The same principle may be used for the red and blue resource areas; also, this concept can be utilized for the network NGOA2 505.

At the service centers, a similar assignment can be conducted: All traffic sent in downlink direction may utilize the lower halves of the red, green and blue spectrum for NGOA1 506 users and the upper halves of the respective spectrum for NGOA2 505 users. Accordingly, Internet traffic for user 1 of the "green resource area" (assigned the green wavelengths) of NGOA1 506 uses the lowest resource of the lower third of the resource pool assigned to the network NGOA 506 and so on.

Hence, all resources are used in an efficient way without any need for routing and/or packet inspection within the network (along the communication path). Traffic delivery can be achieved by ordinary splitters and multiplexers.

It is noted that the spectrum portion assigned to a network may be different as indicated above. For example, various service providers may have different service classes and it may become necessary converting wavelengths: An upper part of the green spectrum may have to be converted into a middle part of the blue spectrum to meet the requirements of, e.g., a business relationship between providers. Lambda converters may be deployed in order to provide such conversion without any need for leaving the optical domain.

### (Further) Advantages

Today's end-to-end broadband data network architecture does not allow for an adequate utilization of resources: Although due to DWDM networks sufficient transport capacity is available, it cannot be flexibly assigned in an efficient way on a per user and/or service basis.

In existing networks, IP routing is provided at (nearly) every transition point between networks thus leading to a significant bottleneck as the traffic increases faster than the technology of the IP routers.

The approach provided, however, suggests an end-to-end approach thereby enabling networks without such bottlenecks and using the available resources in an efficient manner. Hence, the network may flexibly scale with the demand of the traffic growth.

It is also an advantage of the approach suggested that packet handling, in particular on the IP layer, is avoided along the E2E connection. This enables cost-efficient solutions as no optical to electrical to optical interworking is required and low power components can be deployed instead of the power consuming IP routers. Furthermore, simple and economical optical splitters and multiplexers can be utilized instead of costly IP router farms.

As the approach provided utilizes E2E connections, access resources can be efficiently integrated with long haul transport resources. The increasing size of the network may thus increase its efficiency in contrast to any IP-routed network, which becomes incrementally inefficient with its size growing.

Furthermore, the solution matches requirements set forth by users as well as service providers: The solution can be integrated into typical user (home) equipment based on the home network approach. In addition, the solution pre-selects traffic and thus does not require the operator providing costly traffic separation.

Moreover, the solution bears the advantage to support other end-to-end setups (e.g. mobile base station traffic backhaul) in a similar manner.

It is also an advantage that traffic can be transported in a way that is best with regard to requirements of a particular service (service selective) without the need of service awareness in the (long haul) transport. Only the end points are aware of the service, which is a significant advantage compared to today's (IP-)routed networks.

**List of Abbreviations:**
- AAA: Authentication, Authorization and Accounting
- ATM: Asynchronous Transfer Mode
- BRAS: Broadband Remote Access Server
- CET: Carrier Ethernet Transport
- CSMA/CD: Carrier Sense Multiple Access with Collision Detection
- CWDM: Coarse WDM
- DHCP: Dynamic Host Configuration Protocol
- DSL: Digital Subscriber Line
- DSLAM: DSL Access Multiplexer
- DWDM: Dense WDM
- E2E: End-to-End
- ETH: Ethernet
- FW: Firewall
- HSPA: High-Speed Packet Access
- HTTP: Hypertext Transfer Protocol
- IP: Internet Protocol
- LAN: Local Area Network
- LTE: Long Term Evolution
- MLAR: Multi-Lambda-Access-Routers
- MPLS: Multi-Path Label Switching
- NAT: Network Address Translation
- OAM: Operation and Maintenance
- OLT: Optical Line Termination
- ONU: Optical Network Unit
- PON: Passive Optical Network
- SIP: Session Initiation Protocol
- TCP: Transmission Control Protocol
- TRA: Transport
- TV: Television
- VoIP: Voice over IP
- WAN: Wide Area Network
- WDM: Wavelength-Division Multiplexing
- WLAN: Wireless LAN
- xDSL: a derivate of DSL, e.g., ADSL, VDSL, etc.

## Claims

1. A method for conveying data across a shared medium,
- wherein at least one resource is allocated for an end-to-end connection;
- wherein said data is conveyed across the shared medium via the end-to-end connection.

2. The method according to claim 1, wherein the at least one resource is allocated for the end-to-end connection between a source and a destination.

3. The method according to any of the preceding claims,
wherein a portion of resources is allocated for a source of the end-to-end connection.

4. The method according to claim 3, wherein a particular resource of the portion of resources allocated is assigned to a destination of the end-to-end connection.

5. The method according to any of the preceding claims,
wherein the resource comprises at least one of the following:
- at least one wavelength or at least one frequency;
- at least one wavelength or frequency band;
- at least one timeslot.

6. The method according to any of the preceding claims,
wherein the shared medium comprises at least one network, in particular at least one transport network.

7. The method according to claim 6, wherein said transport network is an optical network.

8. The method according to any of claims 6 or 7, wherein the at least one network comprises a wireless network and/or a wired network.

9. The method according to any of the preceding claims,
wherein the at least one resource is allocated per transport network.

10. The method according to any of the preceding claims,
wherein the at least one resource is allocated per service class.

11. The method according to any of the preceding claims,
wherein the service class comprises at least one of the following:
- Internet access;
- voice services;
- television services.

12. The method according to any of the preceding claims,
wherein the at least one resource comprises a resource of a physical layer that is allocated for the end-to-end connection.

13. The method according to any of claims 1 to 11, wherein the at least one resource comprises a resource of a physical layer, a data link layer and/or a medium access control layer that are allocated for the end-to-end connection.

14. A device comprising a processing unit that is arranged such that the method according to any of the preceding claims is executable thereon.

15. The device according to claim 14, wherein said device is a network component, in particular a or being associated with a device of an end-to-end connection, in particular at least one of the following:
- an optical network unit;
- an optical line terminal;
- an MLAR.
